(19) Europäisches Patentamt / European Patent Office / Office européen des brevets

(11) **EP 2 859 304 B1**

(12) **EUROPEAN PATENT SPECIFICATION**

(45) Date of publication and mention
of the grant of the patent:
**07.06.2017 Bulletin 2017/23**

(51) Int Cl.:
*G01B 11/24* (2006.01)  *G01B 21/04* (2006.01)
*G01N 21/88* (2006.01)  *G02B 21/36* (2006.01)

(21) Application number: **13737421.1**

(22) Date of filing: **30.05.2013**

(86) International application number:
**PCT/IB2013/054483**

(87) International publication number:
**WO 2013/182960 (12.12.2013 Gazette 2013/50)**

(54) **OPTICAL MEASURING MACHINE AND METHOD**

OPTISCHER MESSAPPARAT UND OPTISCHE MESSMETHODE

MACHINE ET MÉTHODE DE MESURE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2012 IT RN20120029**
**08.06.2012 IT RN20120030**

(43) Date of publication of application:
**15.04.2015 Bulletin 2015/16**

(60) Divisional application:
**15192525.2 / 3 002 549**

(73) Proprietor: **VICI & C.- S.p.A.**
**47822 Santarcangelo Di Romagna (RN) (IT)**

(72) Inventors:
• **ANDREINI, Stefano**
**I - 47833 Morciano Di Romagna (Rimini) (IT)**
• **VICI, Marco**
**I - 47826 Villa Verucchio (Rimini) (IT)**
• **FANTINI, Erick**
**I - 47923 Rimini (IT)**

(74) Representative: **Zermani, Umberto**
**Bugnion S.p.A.**
**Via di Corticella, 87**
**40128 Bologna (IT)**

(56) References cited:
DE-A1- 19 902 401    US-A1- 2003 053 679
US-A1- 2003 079 360    US-A1- 2011 025 823

## Description

### Technical Field

This invention relates to an optical measuring machine and method.

The invention addresses the field of optical instruments for the optoelectronic determination of parameters, in particular for measuring parts which are mainly planar.

### Background Art

In the prior art, numerous optical (optoelectronic) measuring machines are known which comprise a workpiece supporting stage made of substantially transparent material and interposed between a light source and an image detector.

These machines typically comprise a fixed mount defining the (vitreous) supporting stage along which the optoelectronic measuring system is movable in the main X-Y directions.

Document US2005/109959, for example, describes a machine equipped with a transparent measuring stage (support) on which the workpiece to be measured is positioned, a fixed light source located under the measuring stage and facing upwards in order to illuminate the workpiece with a light beam, and a video capturing system equipped with a camera which is partly movable relative to the stage (along two main directions X-Y) in order to capture a plurality of frames which are then combined by means of specific software to produce a complete image of the measuring field (and of the workpiece).

Alternatively, document US5008743 discloses the possibility of using a measuring stage which is movable relative to the optical system. The optical system comprises, under the stage, a plurality of LEDs arranged in line and, above the stage, a Fresnel lens configured to direct the light rays into a linear camera.

Disadvantageously, the above mentioned devices have several disadvantages.

Indeed, the use of electric drives and light sources tends to cause overheating of the machine, in particular of the measuring stage and camera, leading to distortions in the visual field and reducing measuring precision.

Moreover, the use of a plurality of LEDs directly facing the workpiece does not allow the lighting direction to be effectively controlled.

The presence of the Fresnel lens to collect the light rays and direct them at the camera certainly improves the video capture quality compared to the device of document US2005/109959, but without, however, optimizing it. Further prior art machines are disclosed in documents DE19902401 and US2003/053679, both relating matricial cameras used to detect an image in different frames, assembling them through the use of reference elements.

### Disclosure of the Invention

The technical purpose of this invention is to provide an optical measuring machine and method which overcome the above mentioned disadvantages of the prior art.

More specifically, this invention has for an aim to provide an optical measuring machine and method which can correct the thermal distortions of the camera and components.

A further aim of the invention is to provide a high-performance optical measuring machine and method capable of rapidly providing quality measurements.

These aims are fully achieved by the optical measuring system according to this invention and as defined by the claims, which comprises an optical detection unit equipped with lighting means configured to generate a light beam along a predetermined optical path and video capturing means at least partly aligned with the lighting means along the optical path in order to receive the light beam; the video capturing means having a predetermined focal length and a preset visual field. The machine also comprises a support, interposed between the lighting means and the video capturing means, comprising a transparent panel defining a supporting stage for a workpiece to be measured and positioned along the optical path to be crossed by the light beam, and movement means configured to produce a relative movement between the transparent panel and the optical detection unit along a direction of movement at right angles to the optical path in order to allow a plurality of frames to be captured of the visual field along the direction of movement defining a measuring area of the machine.

According to the invention, the machine also comprises a check master connected to the support, extending along two directions substantially at right angles to each other and positioned within the measuring area of the machine in a plane located at a distance from the video capturing means equal to the focal length, in order to define an element of comparison for correcting a measuring error.

More specifically, the measuring machine comprises a processing unit associated with the video capturing means and configured to combine the above mentioned frames of the visual field in order to a produce a complete image of the measuring area.

The processing unit is in turn equipped with a correction module configured to compare a parameter representing the value of a position or dimension of the check master with a previously stored reference value in order to calculate a correction factor for the captured image. Advantageously, that way, it is possible to guarantee the precision of the measurement, excluding thermal and systematic drift (distortions).

**Brief Description of the Drawings**

These and other features will become more apparent from the following description of a preferred, non-limiting embodiment of it, with reference to the accompanying drawings, in which

- Figure 1 shows a perspective view of an embodiment of an optical measuring machine according to this invention, in a first step of operation;
- Figure 2 shows a perspective view of the optical measuring machine according to this invention, in a second step of operation;
- Figure 3 shows a perspective view of the optical measuring machine according to this invention, in a step of calibration;
- Figure 4 is a schematic side view of the optical measuring machine of Figure 2;
- Figure 5 shows a perspective view of a preferred embodiment of an optical measuring machine according to the invention.

**Detailed Description of the Preferred Embodiments of the Invention**

With reference to the accompanying drawings, the numeral 1 denotes an optical measuring machine according to this invention.

The machine 1 is of the optoelectronic type and is configured to measure mostly workpieces 100 which are mainly planar or which, at least, do not vary significantly in shape along their thickness.

The machine 1 comprises a mounting assembly having a base shaped in such a way as to allow the machine itself to be placed on a supporting surface, preferably horizontal.

The base preferably has a plurality of feet (not illustrated) which are adjustable to allow precise levelling on the supporting surface, even if the latter is irregular in shape.

The machine also comprises a support 4, preferably planar in shape, defining a supporting stage "A" for the workpiece 100 to be measured. Preferably, the support 4 is raised relative to the base.

The support 4 comprises a planar mount 5 (preferably of metal) and a transparent panel 6 running parallel to the mount 5 and defining the above mentioned supporting stage "A" of the workpiece 100.

Preferably, the transparent panel 6 is positioned in a central portion of the support 4, surrounded by the mount 5, whose function is preferably structural.

In the preferred embodiment, the transparent panel 6 is made of a high quality vitreous material. The panel might be made, for example, of borosilicate glass.

It should be noted that the transparent panel 6 is between 1 and 10 mm thick.

The machine 1 further comprises an optical detection unit 7 configured to illuminate the transparent panel 6 (and hence also the workpiece 100 to be measured) with a light beam and to capture the image of the shadow produced by the presence of the workpiece 100.

More specifically, the optical detection unit 7 is equipped with lighting means 8, configured to generate a light beam along a predetermined optical path "B", and video capturing means 9 aligned with the lighting means 8 (along the optical path "B") in order to receive the light beam "F". Thus, the transparent panel 6 (and more generally speaking, the support 4) is interposed between the video capturing means 9 and the lighting means 8 in order to allow measuring the workpiece 100.

The lighting means 8 comprise at least one light source 8a directed towards the transparent panel 6 in order to illuminate it with the light beam.

In the preferred embodiment, the lighting means 8 comprise a single light source 8a. Preferably, the single light source 8a is of the LED (Light Emitting Diode) type.

The lighting means 8 further comprise an optical system 8b associated with the light source 8a to irradiate the light beam towards the transparent panel 6. The advantage of this feature will become clearer as this description continues.

The video capturing means 9 have a predetermined focal length "F" and a preset visual field "V".

The term "focal length" is used to mean the focusing power of an optical system. More specifically, it coincides with the distance (in mm) between the optical system and a focal plane when the object to be focused is at infinity (and thus, the optical rays are parallel to the axis of the system).

The "visual field", on the other hand, is the field in which the video capturing means 9 are active at any instant and it is a function of the "field angle", that is to say, the angular extent of its image circle.

It should be noted that the video capturing means 9 comprise a camera 9a equipped with a respective optical system 9b.

Thus, the visual field "V" and the focal length "F" are defined in combination by the specifications of the camera 9a and by the type of optical system 9b.

In the preferred embodiment, the camera 9a is a linear camera. Hence, the visual field "V" is substantially defined by a linear segment (*array*).

In the preferred embodiment, the visual field "V" is a segment of length between 0 and 170 mm, preferably approximately 150 mm.

Further, the focal length "F" is between 130 and 150mm, preferably approximately 140 mm.

Preferably, therefore, the optical system 8b of the lighting means 8 is facing towards and aligned, along the optical path "B" (defining an operating direction), with the optical system 9b of the video capturing means 9.

The transparent panel 6 is interposed between the optical systems 8b, 9b along the above mentioned operating direction, and oriented transversely thereto, preferably at right angles.

In the embodiment illustrated, the line joining the two optical systems 8b, 9b (corresponding to the operating direction) is substantially vertical, whilst the transparent panel 6 lies in a horizontal plane corresponding to the supporting stage "A" of the workpiece 100.

Thus, in the stretch between the two optical systems 8b, 9b of the lighting means 8 and of the video capturing means 9, the optical path "B" is substantially rectilinear and vertical.

Advantageously, therefore, the workpiece 100 to be measured can be positioned quickly and easily and, moreover, without having to be fastened.

Preferably, the optical systems 8b, 9b are located at a distance "L" from one another.

Further, in order to improve the quality of the image captured by the camera 9a, the optical system 9b of the video capturing means 9 is of the telecentric type.

Preferably, the optical system 8b of the lighting means 8 is also telecentric.

The term "telecentric" denotes optical systems where the main rays are parallel to the optical axis.

The optical system 8b, 9b of the video capturing means 9 and of the lighting means 8 are therefore collimated with each other.

Advantageously, that way, the captured image is totally free of distortions due to light ray diffraction.

The machine 1 further comprises movement means 10 configured to produce a relative movement between the transparent panel 6 and the optical detection unit 7 along a direction of movement "C" at right angles to the optical path "B" in order to allow a plurality of frames to be captured of the visual field along the direction of movement "C".

Consequently, the camera 9a is set up to capture frames in succession along the transparent panel 6 (in particular, along the direction of movement "C") when the movement means 10 are on.

That way, a measuring area "M" of the machine 1 is defined, that is to say, an area whose image to be measured is detected.

The measuring area "M" is variable in size as a function of the shape and size of the workpiece 100 to be measured.

More specifically, the extension of the measuring area "M" of the machine 1 is a function of the working stroke of the movement means 10.

Thus, the measuring area "M" is defined by multiplying the visual field "V" (which, in this case, is linear) by the working stroke of the movement means 10.

It should be noted, however, that the maximum size of the measuring area "M" is defined by the size of the transparent panel 6.

Preferably, the movement means 10, 30 are configured to move the support 4 (and hence the transparent panel 6) relative to the optical detection unit 7.

More specifically, the support 4 is slidable relative to the optical unit 7 along the direction of movement "C", that is, at right angles to the optical path "B".

The movement means 10, 30 also comprise a motor 11, 31 and movement transmission means 12, 32 interposed between the motor 11, 31 itself and the support 4.

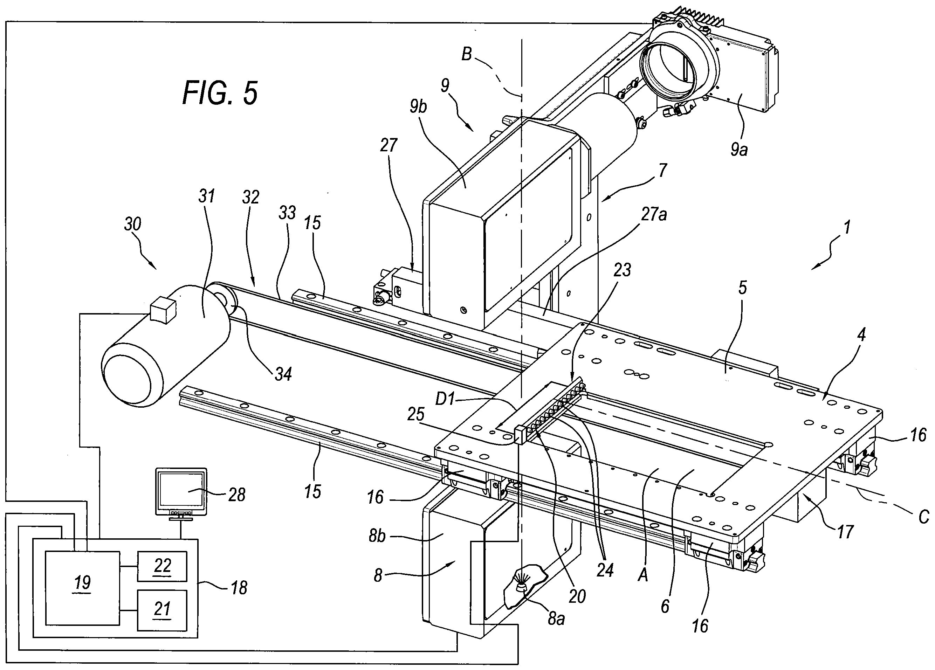

Preferably, (Figure 5), the transmission means 32 are defined by a belt 33 coupled to a pulley 34 which is rigidly connected to the motor 31. Advantageously, the belt transmission eliminates vibrations and allows more precise movement.

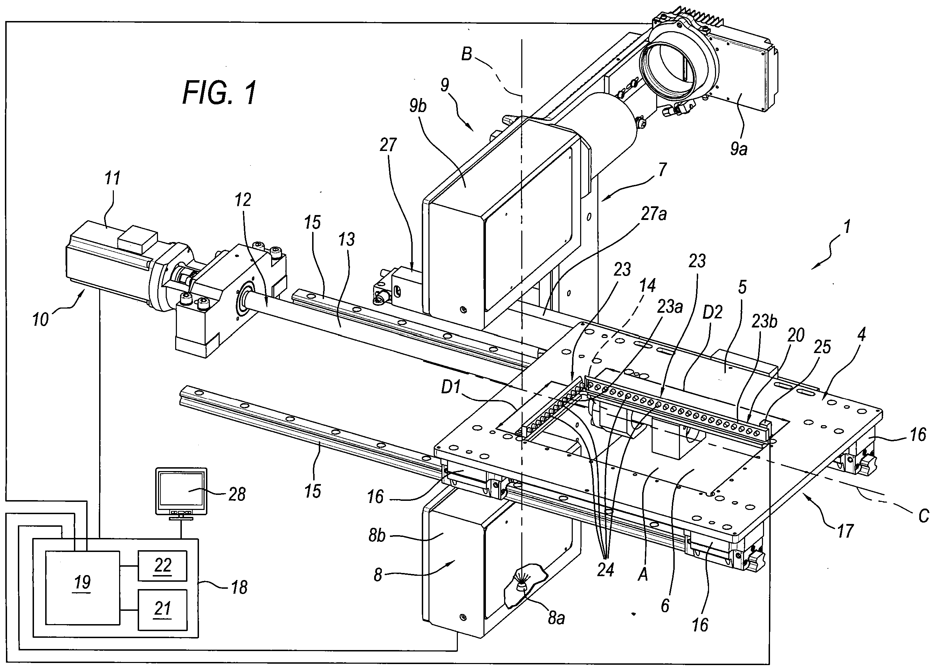

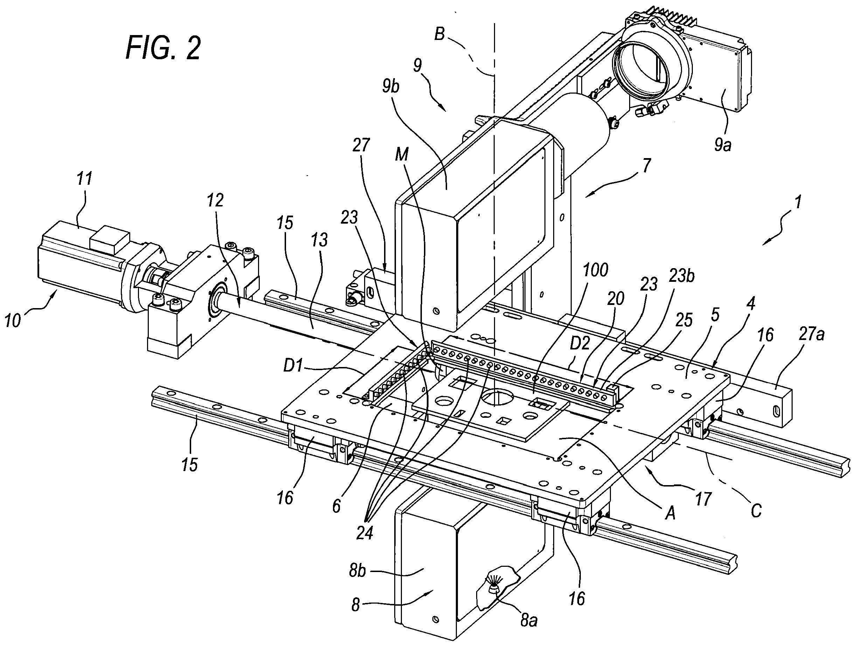

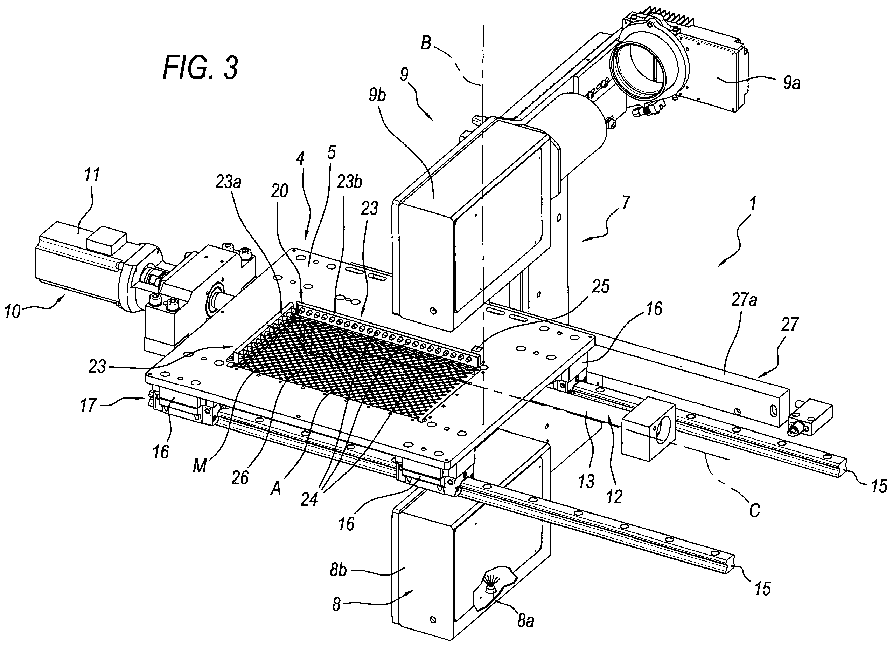

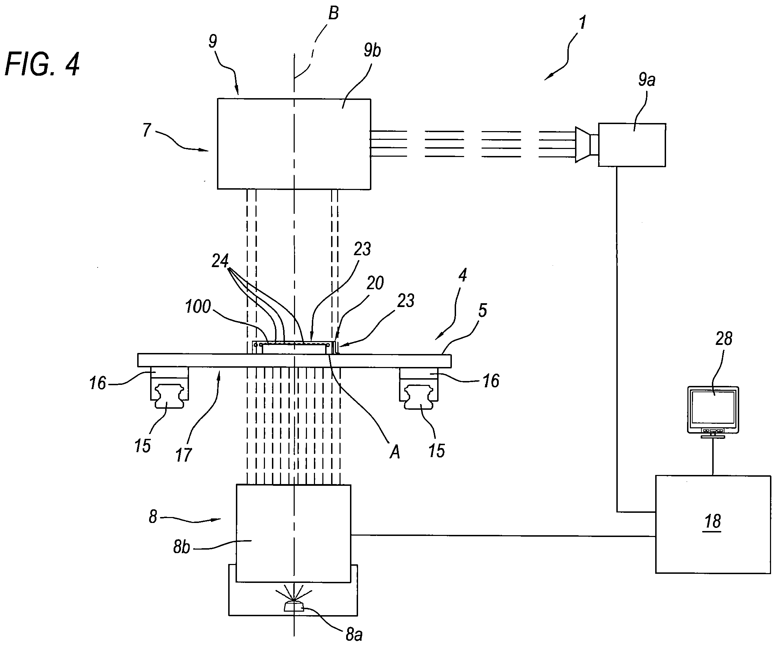

Alternatively (Figures 1-4), the transmission means 12 might be defined by a recirculating ball assembly 13 and at least one endless screw 14 integral with the support 4 for the movement thereof along the direction of movement "C".

In place of the electrical actuator, the movement means might comprise a hydraulic/pneumatic cylinder connected (directly or indirectly) to the support 4 in order to provide linear actuation along the direction of movement "C"

To facilitate this movement, the mounting assembly 2 comprises at least one rail 15 with which the support 4 is slidably associated. The rail 15 extends along the direction of movement "C". In this regard, the support 4 is equipped with at least one shoe 16 which is slidably connected to the rail 15. Thus, the support 4 and the shoe 16 together define a slidable carriage 17.

In the embodiment illustrated, the mounting assembly 2 is equipped with two parallel rails 15 to improve balance and stability.

In light of this, the support 4 is equipped with at least two (preferably four) shoes 16.

Preferably, the support 4 (and hence, the carriage 17) is slidably associated with a displacement sensor 27.

Preferably, the displacement sensor 27 is defined by an optical ruler 27a fixed to the mounting assembly 2 and disposed in parallel with the direction of movement "C".

The optical ruler 27a has a plurality of notches (preferably a constant-pitch, photo-etched chrome pattern).

The video capturing means 9, and in particular the camera 9a, are configured to capture a frame of the visual field "V" upon reaching each notch on the optical ruler 27a.

In an alternative embodiment, it might be possible to move the optical unit 7 while keeping the transparent panel 6 at a fixed position. In this case, therefore, the movement means 10, 30 would operate on the optical unit 7. Further, image capture might be speeded up in another embodiment (not illustrated), where both the support 4 and the optical unit 7 are movable relative to each other along the direction of movement "C". In this case, the movement means 10, 30 operate on both of the components (the support 4 and the optical unit 7), which are movable relative to the mounting assembly 2.

In order to control the movement and captures, the machine 1 comprises a control unit 18 associated with the movement means 10 and the optical unit 7 to drive them in conjunction to capture an image of the workpiece 100.

More specifically, the machine 1 (preferably the control unit 18) comprises a processing module 19 (or processor) associated with the video capturing means 9 in order to combine the plurality of frames captured during the stroke of the movement means 10, 30 in order to produce a complete image of the measuring area "M".

The processing module 19 is associated with a video interface 28 which is configured to exchange data with the processing module 19 (and with the control unit) and to display the captured image to an operator for the latter to obtain the required measurements.

In other words, image capture is a continuous scanning process in which a linear position encoder guarantees the synchrony of the relative movement between the camera 9a and the workpiece 100

According to the invention, the machine 1 comprises means for correcting the error in the measurement of the workpiece 100.

In this regard, the correction means comprise a check master 20 connected to the support 4 and extending along at least one direction which is transversal, preferably at right angles, to the direction of movement "C".

The check master 20 is at least partly inside the measuring area "M" of the machine 1.

In other words, the check master 20 is at least partly inside the visual field "V" of the video capturing means 9 in each frame (at each position of the video capturing means 9 along the working stroke of the movement means 10).

Further, the check master 20 is located at a distance from the camera (in particular from its optical system 9b) which is equal to the focal distance "F", so that it is always focused within each frame

Preferably, the check master 20 comprises at least one segment 23 equipped with a plurality of elements of comparison 24 located in succession along a direction of extension of the segment 23 itself.

Preferably, each element of comparison 24 is substantially equidistant from the two elements of comparison 24 adjacent to it. Thus, the elements of comparison 24 are equispaced along the segment 23.

In the embodiment illustrated, the elements of comparison 24 are defined by a plurality of protuberances projecting parallel to the transparent panel 6.

Preferably, these protuberances are substantially cylindrical in shape. The central axis of each cylindrical protuberance is equidistant from the central axes of the two adjacent protuberances.

Alternatively, the reference elements might be in the form of indentations, grooves or protuberances of other shape.

In order to calculate a correction factor for the captured image, the processing unit 19 is equipped with a correction module 21 configured to compare a parameter representing the value of a position or dimension of the check master 20 with a previously stored reference value.

Thus, the processing unit 21 comprises at least one storage device 22 set up to receive a plurality of data items representing one or more of these reference values.

Preferably, the correction module 21 is configured to compare a value representing the position of each element of comparison 24 in the image captured by the camera 9a with a corresponding stored reference value

Advantageously, it is thus possible to calculate correction factors for the image, thereby eliminating the thermal distortions caused by factors such as overheating of the camera or optical system, or deformations of the image caused by external agents.

Further, the correction module 21 is programmed to calculate the image correction factor for each of the elements of comparison 24, so as to provide different corrections for each zone of the captured image (that is, for each zone of the measuring area "M")

More specifically, the reference values (stored in the storage device 22) each represent the position of the same element of comparison 24 detected under predetermined atmospheric and working conditions.

These predetermined conditions are standard measuring conditions, that is to say:

- temperature between 15°C and 25°C, preferably 20°C;
- humidity between 50 and 70%, preferably 60%.

In the preferred embodiment, correction is performed using the following formula:

$$\text{Compensation} = K * x + q$$

where "K" and "q" are the coefficients of a straight line obtained by interpolation (to the least squares) of all the deviations measured on the check master 20 relative to the position of the check master 20 measured during the step of calibration.

This calculation always takes into account the thermal deformation of the check master 20 based on the temperature supplied by the probe 25 during calibration and during measurement, by approximation on the assumption that deformation is linear along the direction of the check master 20.

Preferably, also, the check master 20 is equipped with a temperature probe 25 associated with the correction module 21 to allow correcting the measurement errors due to temperature variation in the check master 20 itself

More specifically, the correction module 21 is set up to receive from the temperature probe 25 a signal representing the temperature of the check master 20 and is configured to calculate a further correction factor to be applied to the stored reference value.

In other words, the presence of the temperature probe 25 prevents thermal deformation of the check master 20 from affecting the correct calculation of the correction factor.

Indeed, since the behaviour of the material of the check master 20 to variations in temperature is known, its dimensional variations can be calculated in advance.

That means a dimensional variation in the check master 20 can be prevented from affecting the precision of the measurement.

In practice, the correction module 21 calculates a first correction factor (corresponding to the further correction factor) as a function of the measured temperature of the check master 20 and applies it to the stored reference value (representing the position of the elements of comparison 24 under standard conditions).

Next, a second correction factor is calculated as a function of the comparison between the detected position or dimension of the check master 20 and its previously stored reference position or dimension. Preferably, in order to make its presence relatively non-invasive, the check master 20 is mounted at the periphery of the measuring area "M" (and hence of the visual field "V" of the camera 9a).

More specifically, the check master 20 at least partly surrounds the transparent panel 6 and provides a comparison parameter for each frame captured.

It should be noted that the presence of one check master 20 transversal to the direction of movement "C" is sufficient because the displacement sensor 27 (that is, the optical ruler 27a) is mounted along that direction and is capable of providing sufficiently accurate correction data.

Alternatively, however, as illustrated in Figures 1-4, the check master 20 might comprise a first segment 23a and a second segment 23b at right angles to each other and having a first dimension "D1" and a second dimension "D2", respectively.

In the embodiment illustrated, the dimensions "D1" and "D2" correspond to the main dimensions of the transparent panel 6.

Thus, the visual field "V" of the video capturing means 9 has a main dimension (or, since the camera 9a is a linear camera, the only dimension) which is parallel to the first segment 23a whose length is at least equal to the first dimension.

It should be noted that the movement means 10 are configured to cover a working stroke which is parallel to the second segment 23b in order to determine the extent of the measuring area "M".

In this embodiment, the first segment 23a and the second segment 23b form a substantially L-shaped structure disposed along the periphery of the transparent panel 6, at least partly delimiting the measuring area "M". In any case, the transparent panel 6 is preferably connected to the support 4 in such a way as to move towards and away from the check master 20 along a direction parallel to the optical path "B", in such a way as to allow the machine 1 to adapt to measuring workpieces 100 of different thickness.

More precisely, the transparent panel 6 is located at a distance from the video capturing means 9 (in particular, from the optical system 9b) which is greater than or equal to the focal length "F" and it is movable away from the optical system 9b.

Thus, if the check master 20 lies in the focal plane, the transparent panel 6 is movable towards and away from it.

This movement can preferably be controlled by the operator using adjustment means (automatic or manual) as a function of the thickness "s" of the workpiece 100 to be measured.

Thus, the adjustment means are operatively interposed between the support 4 (in particular, the mount 5) and the transparent panel 6.

In the preferred embodiment, the video capturing means (and hence the camera 9b) are located above the transparent panel 6, whereas the lighting means 8 are located under it.

Thus, a movement of the transparent panel 6 towards or away from the camera 9a allows varying the height of the supporting stage "A" of the workpiece 100 as a function of the workpiece thickness "s", by positioning in the focal plane, that is, aligned with the check master 20, the part of the workpiece to be measured.

The machine 1 is thus used to measure workpieces 100 of substantially planar shape by implementing a measuring method which also forms an object of this invention.

The method might, however, also be implemented by an optical measuring machine whose features differ in some respects from those of the one described above.

Whatever the case, the machine must have at least one optical detection unit 7 equipped with lighting means 8 and video capturing means 9 between which the transparent panel 6 is interposed so it is crossed by a light beam.

The method comprises a step of preparing a check master 20 having predetermined (or previously stored) position or dimensions within the measuring area "M" of the machine 1 (and hence of the visual field "V" of the camera 9a).

More specifically, the position of each of the elements of comparison 24 described above is predetermined.

After that, the workpiece 100 to be measured is placed on the transparent panel 6.

If necessary, the transparent panel 6 can be moved towards or away from the video capturing means 9 in order to position in the focal plane, that is, aligned with the check master 20, the part of the workpiece 100 to be measured.

Once the workpiece 100 is positioned (or even before then, if necessary), the optical detection unit 7 is activated to capture at least one frame (preferably a plurality of frames) of the visual field "V".

Thus, the lighting means 8 and the video capturing means 9 are activated. There is also a step of producing a relative movement between the panel 6 and the optical detection unit 7 along a direction of movement "C" at right angles to a line joining the camera 9a to the lighting means 8 (that is, at right angles to the optical path "B").

That way, a plurality of frames of the visual field "V" are captured in succession, such as to obtain a complete image of the measuring area "M" of the machine 1 (and hence of the workpiece 100 and of the check master 20).

The method comprises, at this point, a step of comparing the measured position or dimension of the check master 20 with the predetermined position or dimension, followed by a step of correcting the measurement of the captured image of the workpiece 100 as a function of the comparison. The correcting step preferably comprises calculating at least one correction factor (or correction parameter).

Preferably, the method also comprises a step of measuring the temperature of the check master 20, preferably performed concurrently with the image captures.

In this case, the step of correcting the measurement of the image of the workpiece 100 also comprises the sub-step of calculating a first correction factor as a function of the measured temperature of the check master 20. The first correction factor is applied to the predetermined position of the elements of comparison 24 whose position has changed as a result of temperature variation.

Next, a second correction factor is calculated as a function of the comparison between the detected position or dimension of the check master 20 and the predetermined reference position or dimension. Preferably, in order to determine the position (preferable) or dimension (alternative or additional) of the check master 20, the method comprises a preliminary step of calibration.

It should be noted that the step of calibration is performed under predetermined atmospheric or working conditions, corresponding to those mentioned above in the description of the machine 1.

The step of calibration comprises a plurality of sub-steps.

Firstly, the check master 20 is placed inside the measuring area "M" of the machine 1.

Also, a calibration element 26 of known dimensions is placed on the transparent panel 6 at a distance from the video capturing means 9 corresponding to the focal length "F".

Preferably, the calibration element 26 is defined by a pattern which is semi transparent to light and whose dimensions are known from the laboratory.

The pattern is semi transparent to light because it has alternated opaque and transparent portions of known dimensions (typically square) and hence useful as a reference for calibration.

Thus, the lighting means 8 and the video capturing means 9 (in particular the camera 9a) are activated to capture at least one frame of the visual field.

Next, a relative movement is produced between the panel 6 and the optical detection unit 7 along the direction on movement "C" (that is, at right angles to the optical path "B").

That way, a plurality of frames of the visual field "V" are captured in succession, such as to obtain a complete image of the measuring area "M" of the machine 1 (and hence of the calibration element 26 and of the check master 20).

After that, a processing unit 19 determines the position and/or dimension of the check master 20 as a function of the known dimensions of the calibration element 26.

The position and/or dimension of the check master (in particular, of each of the elements of comparison 24 described above) is/are stored.

At this point, the calibration element 26 is removed and the workpieces 100 can start to be measured.

The invention achieves the preset aims and brings important advantages. In effect, the presence of a check master whose positional (or dimensional) features are predetermined (or rather, stored) makes it possible to detect thermal drift of the machine, correct errors and optimize measurement.

Besides, placing the check master at the periphery of the transparent panel means that the check master is non-invasive, although always present in the visual field of the camera.

Further, the possibility of measuring its temperature prevents deformation of the check master itself from reducing measurement precision.

Also, the telecentric optical systems for both of the components of the optical detection unit make measurement extremely precise in the whole of the measuring field, preventing image deformation due to ray diffraction. Moreover, use of a linear camera and a supporting stage (transparent panel) which is movable in a straight line makes image capture at once rapid and precise.

## Claims

1. An optical measuring machine, comprising:

    - an optical detection unit (7) equipped with lighting means (8) configured to generate a light beam along a predetermined optical path (B), and video capturing means (9) at least partly aligned with the lighting means (8) along the optical path (B) in order to receive the light beam;

the video capturing means (9) having a predetermined focal length (F) and a preset visual field (V);

- a support (4), interposed between the lighting means (8) and the video capturing means (9), comprising a transparent panel (6) defining a supporting stage (A) for a workpiece (100) to be measured and positioned along the optical path (B) to be crossed by the light beam;

- movement means (10, 30) configured to produce a relative movement between the transparent panel (6) and the optical detection unit (7) along a direction of movement (C) at right angles to the optical path (B) in order to allow a plurality of frames to be captured of the visual field (V) along the direction of movement (C) defining a measuring area (M) of the machine; a check master (20) connected to the support (4), extending along at least one direction transversal to the direction of movement (C) and positioned within the measuring area (M) of the machine in a plane located at a distance from the video capturing means (9) equal to the focal length (F), in order to define an element of comparison for correcting a measuring error

wherein the check master (20) comprises at least one segment (23) equipped with a plurality of elements of comparison (24) located in succession along a direction of extension of the segment (23) itself; **characterized in that** said optical measuring machine comprises a processina unit (19) having a correction module (21) configured to compare a value representing the position of each element of comparison (24) in the image captured by the video capturing means (9) with a corresponding stored reference value, and programmed to calculate the image correction factor for each of the elements of comparison (24), so as to provide different corrections for each zone of the captured image.

2. The machine according to claim 1, **characterized in that** the processing unit (19) is associated with the video capturing means and configured to combine the frames of the visual field (V) in order to a produce a complete image of the measuring area (M); the correction module (21) configured to compare a parameter representing the value of a position or dimension of the check master (20) with a stored reference value in order to calculate a correction factor for the captured image.

3. The machine according to claim 1, **characterized in that** the segment (23) has a main dimension (D1) and the visual field (V) of the video capturing means (9) has a main dimension which is parallel to the segment (23) and which is at least equal to the main dimension (D1).

4. The machine according to claim 1, **characterized in that** the video capturing means comprise a linear camera (9a) having a visual field (V) which is substantially rectilinear and whose dimension is at least equal to the first dimension (D1).

5. The machine according to any of the preceding claims, **characterized in that** the stored reference values each represent the position of the respective element of comparison (24) detected under predetermined atmospheric and working conditions.

6. The machine according to any of the preceding claims, **characterized in that** the check master (20) is equipped with a temperature probe (25) associated with the correction module (21) to allow correcting the measurement errors due to temperature variation in the check master (20) itself.

7. The machine according to claim 6, **characterized in that** the correction module (21) is set up to receive from the temperature probe (25) a signal representing the temperature of the check master (20) and is configured to calculate a further correction factor to be applied to the stored reference value.

8. The machine according to any of the preceding claims, **characterized in that** the video capturing means (9) and the lighting means (8) are equipped with respective telecentric optical systems (8b, 9b) which are collimated with each other, in order to prevent image distortions.

9. The machine according to any of the preceding claims, **characterized in that** the transparent panel (6) is movable towards and away from the check master (20) in a direction parallel to the optical path (B) in order to adapt the machine to the thickness (s) of the workpiece (100) to be measured.

10. An optical measuring method implemented by the measuring machine according to any of the preceding claims, comprising the steps of:

- preparing the check master (20), having predetermined position or dimension, inside a measuring area of the machine (1);
- placing a workpiece (100) to be measured on the transparent panel (6);
- activating the optical detection unit (7) in order to capture at least one frame of the visual field (V) of the video capturing means (9);
- producing a relative movement between the transparent panel (6) and the optical detection unit (7) along a direction of movement (C) parallel to the transparent panel (6) in order to capture a plurality of frames of the visual field (V) in succession along the direction of movement (C), so as to obtain a complete image of the measuring area (M);

- comparing the measured position or dimension of the check master (20) with the predetermined position or dimension by comparing a value representing the position of each element of comparison (24) in the image captured by the video capturing means (9) with a corresponding stored reference value;

- correcting the measurement of the image of the workpiece (100) as a function of the comparison by calculating said image correction factor for each of the elements of comparison (24), so as to provide different corrections for each zone of the captured image.

11. The method according to claim 10, **characterized in that** it comprises a step of calibration, preceding the step of placing the workpiece to be measured, the step of calibration comprising the following substeps:

- preparing the check master (20) inside the measuring area (M) of the machine (1);

- placing a calibration element (26) of known dimensions on the transparent panel (6) at a distance from the camera (9a) corresponding to the focal length (F);

- activating the lighting means (8) and the video capturing means (9) in order to capture at least one frame of the visual field (V) of the camera;

- producing a relative movement between the transparent panel (6) and the optical detection unit (7) along a direction parallel to the transparent panel (6) in order to capture a plurality of frames of the visual field in succession along the transparent panel (6), so as to obtain a complete image of the measuring area (M);

- determining the position or dimension of the check master (20) as a function of the known dimensions of the calibration element (26);

- storing the position or dimension of the check master (20);

- removing the calibration element (26).

12. The method according to claim 11, **characterized in that** the calibration element (26) is defined by a pattern which is semi transparent to light and whose dimensions are known from the laboratory.

13. The method according to any of the claims from 10 to 12, **characterized in that** it comprises a step of measuring the temperature of the check master (20); the step of correcting the measurement of the image of the workpiece (100) comprising the following substeps:

- calculating a first correction factor as a function of the measured temperature of the check master;

- calculating a second correction factor as a function of the comparison between the detected position or dimension of the check master (20) and the known position or dimension.

**Patentansprüche**

1.  Optischer Messapparat, umfassend:

- eine optische Detektionseinheit (7), die mit Beleuchtungsmitteln (8) ausgestattet ist, ausgelegt, um einen Lichtstrahl entlang eines vorgegebenen optischen Wegs (B) zu erzeugen, sowie mit Videoerfassungsmitteln (9), die zumindest teilweise mit den Beleuchtungsmitteln (8) entlang des optischen Wegs (B) ausgerichtet sind, um den Lichtstrahl zu empfangen, wobei die Videoerfassungsmittel (9) eine vorgegebene fokale Länge (F) und ein vorgegebenes Sichtfeld (V) aufweisen;

- eine Halterung (4), die zwischen den Beleuchtungsmitteln (8) und den Videoerfassungsmitteln (9) eingesetzt ist, umfassend ein transparentes Paneel (6), das eine Halterungsstufe (A) für ein zu messendes Werkstück (100) definiert, das entlang des optischen Wegs (B), der vom Lichtstrahl gekreuzt werden soll, positioniert ist;

- Bewegungsmittel (10, 30), die ausgelegt sind, um eine relative Bewegung zwischen dem transparenten Paneel (6) und der optischen Detektionseinheit (7) entlang einer Bewegungsrichtung (C) in rechten Winkeln zum optischen Weg (B) zu erzeugen, um einer Vielzahl an Rahmen des Sichtfelds (V) zu erlauben, entlang der Bewegungsrichtung (C) erfasst zu werden, definierend einen Messbereich (M) des Apparats;

ein Stufenendmaß (20), das mit der Halterung (4) verbunden ist, sich erstreckend entlang mindestens einer Richtung, die quer zur Bewegungsrichtung (C) verläuft und im Messbereich (M) des Apparats platziert ist, in einer Ebene, die sich auf einem Abstand von den Videoerfassungsmitteln (9) gleich der fokalen Länge (F) befindet, um ein Vergleichselement zur Korrektur eines Messfehlers zu definieren, wobei das Stufenendmaß (20) mindestens ein Segment (23) umfasst, das mit einer Vielzahl an Vergleichselementen (24) ausgestattet ist, die nacheinander entlang einer Ausdehnungsrichtung des Segments (23) angeordnet sind, **dadurch gekennzeichnet, dass** der optische Messapparat eine Verarbeitungseinheit (19) umfasst, aufweisend ein Korrekturmodul (21), das ausgelegt ist, um einen Wert, der die Position eines jeden Vergleichselements (24) im durch die Videoerfassungsmittel (9) erfassten Bild mit einem entsprechenden gespeicherten Referenzwert vergleicht, und das programmiert ist, um den Bildkorrekturfaktor für ein jedes der Vergleichselemente (24) zu berechnen, sodass unterschiedliche Korrekturen für jede Zone des erfassten Bilds bereitgestellt werden.

2. Apparat nach Anspruch 1, **dadurch gekennzeichnet, dass** die Verarbeitungseinheit (19) mit den Videoerfassungsmitteln assoziiert und ausgelegt ist, um die Rahmen des Sichtfelds (V) zu kombinieren, um ein vollständiges Bild des Messbereichs (M) zu erzeugen, wobei das Korrekturmodul (21) ausgelegt ist, um einen Parameter, der den Wert einer Position oder einer Abmessung des Stufenendmaßes (20) darstellt, mit einem gespeicherten Referenzwert zu vergleichen, um einen Korrekturfaktor für das erfasste Bild zu berechnen.

3. Apparat nach Anspruch 1, **dadurch gekennzeichnet, dass** das Segment (23) eine Hauptabmessung (D1) aufweist und das Sichtfeld (V) der Videoerfassungsmittel (9) eine Hauptabmessung aufweist, die parallel zum Segment (23) angeordnet und mindestens gleich der Hauptabmessung (D1) ist.

4. Apparat nach Anspruch 1, **dadurch gekennzeichnet, dass** die Videoerfassungsmittel eine lineare Kamera (9a) umfassen, aufweisend ein Sichtfeld (V), das im Wesentlichen geradlinig ist und dessen Abmessung mindestens gleich der ersten Abmessung (D1) ist.

5. Apparat nach einem der vorhergehenden Ansprüche, **dadurch gekennzeichnet, dass** die gespeicherten Referenzwerte jeweils die Position des jeweiligen Vergleichselements (24) darstellen, erfasst unter vorgegebenen atmosphärischen und Betriebsbedingungen.

6. Apparat nach einem der vorhergehenden Ansprüche, **dadurch gekennzeichnet, dass** das Stufenendmaß (20) mit einem Temperaturfühler (25) ausgestattet ist, assoziiert mit dem Korrekturmodul (21), um die Korrektur der Messfehler aufgrund einer Temperaturänderung im Stufenendmaß (20) zu erlauben.

7. Apparat nach Anspruch 6, **dadurch gekennzeichnet, dass** das Korrekturmodul (21) eingerichtet ist, um vom Temperaturfühler (25) ein Signal zu empfangen, das die Temperatur des Stufenendmaßes (20) darstellt, und ausgelegt ist, um einen weiteren Korrekturfaktor zu berechnen, der auf den gespeicherten Referenzwert anzuwenden ist.

8. Apparat nach einem der vorhergehenden Ansprüche, **dadurch gekennzeichnet, dass** die Videoerfassungsmittel (9) und die Beleuchtungsmittel (8) mit jeweiligen telezentrischen optischen Systemen (8b, 9b) ausgestattet sind, die zueinander parallel gerichtet werden, um Bildverzerrungen zu vermeiden.

9. Apparat nach einem der vorhergehenden Ansprüche, **dadurch gekennzeichnet, dass** das transparente Paneel (6) hinführend zum Stufenendmaß (20) und wegführend von diesem parallel zum optischen Weg (B) bewegbar ist, um den Apparat der Dicke (s) des zu messenden Werkstücks (100) anzupassen.

10. Optische Messmethode, implementiert durch den Messapparat nach einem der vorhergehenden Ansprüche, umfassend die folgenden Schritte:

    - Vorbereiten des Stufenendmaßes (20), aufweisend eine vorgegebene Position oder Abmessung, in einem Messbereich des Apparats (1);
    - Platzieren eines zu messenden Werkstücks (100) auf dem transparenten Paneel (6);
    - Aktivieren der optischen Detektionseinheit (7), um mindestens einen Rahmen des Sichtfelds (V) der Videoerfassungsmittel (9) zu erfassen;
    - Erzeugen einer relativen Bewegung zwischen dem transparenten Paneel (6) und der optischen Detektionseinheit (7) entlang einer Bewegungsrichtung (C), die parallel zum transparenten Paneel (6) verläuft, um eine Vielzahl an Rahmen des Sichtfelds (V) nacheinander entlang der Bewegungsrichtung (C) zu erfassen, sodass ein vollständiges Bild des Messbereichs (M) erhalten wird;
    - Vergleichen der gemessenen Position oder Abmessung des Stufenendmaßes (20) mit der vorgegebenen Position oder Abmessung durch den Vergleich eines Werts, der die Position eines jeden Vergleichselements (24) im durch die Videoerfassungsmittel (9) erfassten Bild darstellt, mit einem entsprechenden gespeicherten Referenzwert;
    - Korrigieren der Messung des Bilds des Werkstücks (100), abhängig vom Vergleich, indem der Bildkorrekturfaktor für ein jedes der Vergleichselemente (24) berechnet wird, sodass unterschiedliche Korrekturen für jede Zone des erfassten Bilds bereitgestellt werden.

11. Methode nach Anspruch 10, **dadurch gekennzeichnet, dass** sie einen Schritt zum Kalibrieren umfasst, der vor dem Schritt zum Platzieren des zu messenden Werkstücks stattfindet, wobei der Schritt zum Kalibrieren die folgenden Unterschritte umfasst:

    - Vorbereiten des Stufenendmaßes (20) im Messbereich (M) des Apparats (1);
    - Platzieren eines Kalibrierungselements (26) mit bekannten Abmessungen auf dem transparenten Paneel (6) in einem Abstand von der Kamera (9a), der der fokalen Länge (F) entspricht;
- Aktivieren des Lichtstrahls (8) und der Videoerfassungsmittel (9), um mindestens einen Rahmen des Sichtfelds (V) der Kamera zu erfassen;
- Erzeugen einer relativen Bewegung zwischen dem transparenten Paneel (6) und der optischen Detektionseinheit (7) entlang einer Richtung, die parallel zum transparenten Paneel (6) verläuft, um eine Vielzahl an Rahmen des Sichtfelds (V) nacheinander entlang des transparenten Paneels (6) zu erfassen, sodass ein vollständiges Bild des Messbereichs (M) erhalten wird;
- Ermitteln der Position oder Abmessung des Stufenendmaßes (20), abhängig von den bekannten Abmessungen des Kalibrierungselements (26);
- Speichern der Position oder Abmessung des Stufenendmaßes (20);
- Entfernen des Kalibrierungselements (26).

12. Methode nach Anspruch 11, **dadurch gekennzeichnet, dass** das Kalibrierungselement (26) durch ein Muster definiert ist, das halb lichtdurchlässig ist und dessen Abmessungen dem Labor bekannt sind.

13. Methode nach einem der Ansprüche 10 bis 12, **dadurch gekennzeichnet, dass** sie einen Schritt zum Messen der Temperatur des Stufenendmaßes (20) umfasst, wobei der Schritt zum Korrigieren der Messung des Bilds des Werkstücks (100) die folgenden Unterschritte umfasst:

   - Berechnen eines ersten Korrekturfaktors, abhängig von der gemessenen Temperatur des Stufenendmaßes;
   - Berechnen eines zweiten Korrekturfaktors, abhängig vom Vergleich zwischen der erfassten Position oder Abmessung des Stufenendmaßes (20) und der bekannten Position oder Abmessung.

**Revendications**

1. Machine de mesure optique, comprenant :

   - une unité de détection optique (7) équipée de moyens d'éclairage (8) configurés pour générer un faisceau lumineux le long d'un chemin optique (B) prédéfini, et des moyens de capture vidéo (9) au moins partiellement alignés aux moyens d'éclairage (8) le long du chemin optique (B) afin de recevoir le faisceau lumineux ; les moyens de capture vidéo (9) comportant une longueur focale (F) prédéfinie et un champ visuel (V) préétabli ;
   - un support (4), interposé entre les moyens d'éclairage (8) et les moyens de capture vidéo (9), comprenant un panneau transparent (6) définissant un niveau de support (A) pour une pièce d'usinage (100) à mesurer et positionnée le long du chemin optique (B) devant être traversé par le faisceau lumineux ;
   - des moyens de déplacement (10, 30) configurés pour produire un déplacement relatif entre le panneau transparent (6) et l'unité de détection optique (7) le long d'une direction de déplacement (C) orthogonale au chemin optique (B) afin de permettre à une pluralité de trames d'être capturées du champ visuel (V) le long de la direction de déplacement (C) définissant une zone de mesure (M) de la machine ;

   un maître de contrôle (20) relié au support (4), se prolongeant le long d'au moins une direction transversale à la direction de déplacement (C) et positionné à l'intérieur de la zone de mesure (M) de la machine dans un plan situé à une certaine distance des moyens de capture vidéo (9) égale à la longueur focale (F), afin de définir un élément de comparaison pour corriger une erreur de mesure ;
   dans laquelle le maître de contrôle (20) comprend au moins un segment (23) équipé d'une pluralité d'éléments de comparaison (24) situés les uns à la suite des autres le long d'une direction d'extension du segment (23) lui-même ; **caractérisée en ce que** ladite machine de mesure optique comprend une unité de traitement (19) comportant un module de correction (21) configuré pour comparer une valeur représentant la position de chaque élément de comparaison (24) dans l'image capturée par les moyens de capture vidéo (9) avec une valeur de référence mémorisée, et programmée pour calculer le facteur de correction d'image pour chacun des éléments de comparaison (24), de sorte à fournir des corrections différentes pour chaque zone de l'image capturée.

2. Machine selon la revendication 1, **caractérisée en ce que** l'unité de traitement (19) est associée aux moyens de capture vidéo et configurée pour combiner les trames du champ visuel (V) afin de produire une image complète de la zone de mesure (M) ; le module de correction (21) est configuré pour comparer un paramètre représentant la valeur d'une position ou dimension du maître de contrôle (20) avec une valeur de référence mémorisée afin de calculer un facteur de correction pour l'image capturée.

3. Machine selon la revendication 1, **caractérisée en ce que** le segment (23) comporte une dimension principale (D1) et le champ visuel (V) des moyens de capture vidéo (9) comporte une dimension principale étant parallèle au segment (23) et étant au moins égale à la dimension principale (D1).

**4.** Machine selon la revendication 1, **caractérisée en ce que** les moyens de capture vidéo comprennent un caméra linéaire (9a) comportant un champ visuel (V) étant substantiellement rectiligne et dont la dimension est au moins égale à la première dimension (D1).

**5.** Machine selon l'une quelconque des revendications précédentes, **caractérisée en ce que** les valeurs de référence mémorisées représentent chacune la position de l'élément respectif de comparaison (24) détectée dans des conditions atmosphériques et de travail prédéfinies.

**6.** Machine selon l'une quelconque des revendications précédentes, **caractérisée en ce que** le maître de contrôle (20) est équipé d'une sonde de température (25) associée au module de correction (21) pour permettre la correction des erreurs de mesure dues à la variation de température dans le maître de contrôle (20) lui-même.

**7.** Machine selon la revendication 6, **caractérisée en ce que** le module de correction (21) est réglé pour recevoir de la sonde de température (25) un signal représentant la température du maître de contrôle (20) et est configuré pour calculer un facteur de correction supplémentaire à appliquer à la valeur de référence mémorisée.

**8.** Machine selon l'une quelconque des revendications précédentes, **caractérisée en ce que** les moyens de capture vidéo (9) et les moyens d'éclairage (8) sont équipés de systèmes optiques télécentriques (8b, 9b) étant collimatés les uns aux autres, afin d'empêcher des distorsions d'image.

**9.** Machine selon l'une quelconque des revendications précédentes, **caractérisée en ce que** le panneau transparent (6) peut se rapprocher ou s'éloigner du maître de contrôle (20) dans une direction parallèle au chemin optique (B) afin d'adapter la machine à l'épaisseur/aux épaisseurs de la pièce d'usinage (100) à mesurer.

**10.** Procédé de mesure optique mis en place par la machine de mesure selon l'une quelconque des revendications précédentes, comprenant les étapes de :

 - préparer le maître de contrôle (20), ayant une position ou dimension prédéterminée, à l'intérieur d'une zone de mesure de la machine (1) ;
 - placer la pièce d'usinage (100) à mesurer sur la panneau transparent (6) ;
 - actionner l'unité de détection optique (7) afin de capturer au moins une trame du champ visuel (V) des moyens de capture vidéo (9) ;
 - produire un déplacement relatif entre le panneau transparent (6) et l'unité de détection optique (7) le long d'une direction de déplacement (C) parallèle au panneau transparent (6) afin de capturer une pluralité de trames du champ visuel (V) les unes à la suite des autres le long de la direction de déplacement (C) de manière à obtenir une image complète de la zone de mesure (M) ;
 - comparer la position ou la dimension mesurée du maître de contrôle (20) avec la position ou la dimension prédéterminée en comparant une valeur représentant la position de chaque élément de comparaison (24) dans l'image capturée par les moyens de capture vidéo (9) avec une valeur de référence mémorisée correspondante ;
 - corriger la mesure de l'image de la pièce d'usinage (100) en fonction de la comparaison en calculant ledit facteur de correction d'image pour chacun des éléments de comparaison (24), de sorte à fournir différentes corrections pour chaque zone de l'image capturée.

**11.** Procédé selon la revendication 10, **caractérisé en ce qu'**il comprend une étape d'étalonnage précédant l'étape consistant à placer la pièce d'usinage à mesurer, l'étape d'étalonnage comprenant les sous-étapes suivantes :

 - préparer le maître de contrôle (20) à l'intérieur de la zone de mesure (M) de la machine (1) ;
 - placer un élément d'étalonnage (26) aux dimensions connues sur la panneau transparent (6) à une distance de la caméra (9a) correspondant à la longueur focale (F) ;
 - actionner les moyens d'éclairage (8) et les moyens de capture vidéo (9) afin de capturer au moins une trame du champ visuel (V) de la caméra ;
 - produire un déplacement relatif entre le panneau transparent (6) et l'unité de détection optique (7) le long d'une direction parallèle au panneau transparent (6) afin de capturer une pluralité de trames du champ visuel les unes à la suite des autres le long du panneau transparent (6) de manière à obtenir une image complète de la zone de mesure (M) ;
 - déterminer la position ou la dimension du maître de contrôle (20) en fonction des dimensions connues de l'élément d'étalonnage (26) ;
 - mémoriser la position ou la dimension du maître de contrôle (20) ;
 - retirer l'élément d'étalonnage (26).

**12.** Procédé selon la revendication 11, **caractérisé en ce que** l'élément d'étalonnage (26) est défini par un modèle étant semi-transparent à la lumière et dont les dimensions sont connues du laboratoire.

**13.** Procédé selon l'une quelconque des revendications de 10 à 12, **caractérisé en ce qu'**il comprend une étape consistant à mesurer la température du maître de contrôle (20) ; l'étape consistant à corriger la mesure de l'image de la pièce d'usinage (100) comprenant les sous-étapes suivantes :

- calculer un premier facteur de correction en fonction de la température mesurée du maître de contrôle ;
- calculer un second facteur de correction en fonction de la comparaison entre la position ou la dimension détectée du maître de contrôle (20) et la position ou la dimension connue.

FIG. 1

# FIG. 2

FIG. 3

FIG. 4

FIG. 5

**EP 2 859 304 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005109959 A
- US 5008743 A
- DE 19902401
- US 2003053679 A